# EUROPEAN PATENT APPLICATION

(11) **EP 2 818 052 A2**
(43) Date of publication of application: **31.12.2014**
(21) Application number: 14156538.2
(22) Date of filing: 25.02.2014
(51) Int. Cl.: A23G 3/56

(54) **Container handle of non frozen seasonings for popsicles**

(30) Priority: 28.06.2013 ES 201300597 U
(71) Applicant: Herrera Lopez, Carlos Martin, 45138 Zapopan - Janisco (MX); Orozco Ruiz, Francisco, 45138 Zapopan-Jalisco (MX)
(72) Inventor: Herrera Lopez, Carlos Martin, 45138 Zapopan - Janisco (MX); Orozco Ruiz, Francisco, 45138 Zapopan-Jalisco (MX)
(74) Representative: De Pablos Riba, Juan Ramon

(57) **Abstract**

This invention consists in a container handle of non frozen seasonings for popsicles, which is used by filling the handle with a non frozen seasoning, the handle is coiled to a lid and then inserted in the popsicle mold, in which the popsicle is frozen, after being frozen the popsicle is extracted from the mold to be packed. Consumer unpacks de popsicle, lifts the superior flanges and turns them separating the pivot from the lid to leave a hole in the ice, with the hole open then the consumer may press the handle and the non frozen seasoning flows through the hole suffusing the popsicle.

It is a unique patent because it incorporates the following innovations; it makes possible to have popsicles with a self content non frozen seasoning which flux is controlled by the consumer. It may be adapted to an existing popsicle mold because the flanges that make de device work are exposed in the popsicles surface.

It counts with elements that fix the handle to the popsicle mold during the freezing process, without requiring the use of additional elements.

## Description

### OBJECTIVE OF THE INVENTION

The goal of this invention is that when incorporated to popsicles, it will help the popsicles to have a non frozen seasoning inside, giving the consumer enough comfort to hold the popsicle and to control the seasoning to suffuse the popsicle enriching its flavor and the consumption experience. Even though the seasoning may be added through other means, the utility patent simplifies the application of the seasoning and allows the application to be made using one hand by making the seasoning to be self-contained by the popsicle and the flow to be controlled by the consumer.

### STATE OF THE ART

This invention refers to a handle to contain non frozen seasonings for popsicles. There exist several hollow popsicles which are filled with liquors or other fillings, however, the patent applied for is original, because the existing products have no control regarding the flow of the fillings to the popsicle, or regarding the way in which the device is inserted to the popsicle.

### DETAILED DESCRIPTION OF INVENTION

The invention is composed by three sections, the container handle (1), the lid (2) and the pivot (4). The container handle (1), is fabricated with low density polyethylene, which allows it to be flexible, it has a thread in the neck which allows it to assembly with the lid (2).

The lid is fabricated with plastic, which allows it to break at the pivot (4) spot when submitted to a torque force and allows it not to be breakable at the same time. Besides the thread which allows the assemble, there are two rifling locks, which allow the coil but once inside prevent both parts to unassembled, this is with the goal to give the consumer an additional warranty seal, and to simplify its use.

To prepare the popsicle using the patent, the container handle (1) is filled with the non frozen seasoning (6), once filled it is coiled to the lid (2). The superior flanges (5) are folded aligning them with the pivot (4) and pointing to the side of the container handle (1), only to plunge the utility patent in the popsicle mold (7) leaving the container handle (1) exposed and the lid (2) plunged. The utility patent remains fix in the popsicle mold (7) because the inferior flanges (3) rest on the mold walls.

Once the popsicle is frozen, the mold is extracted and the popsicle is packed. For consumption, the popsicle is unpacked and the superior flanges (5) must be lifted.

With the superior flanges (5) lifted, they must be turned in any direction, with that turn the pivot (4) will pop from the lid (2), extracting the pivot leaving an exposed hole.

When the consumer presses the container handler (1), the capacity volume will decrease, making the seasoning flow through the hole suffusing the popsicle.

### DESCRIPTION OF DRAWINGS

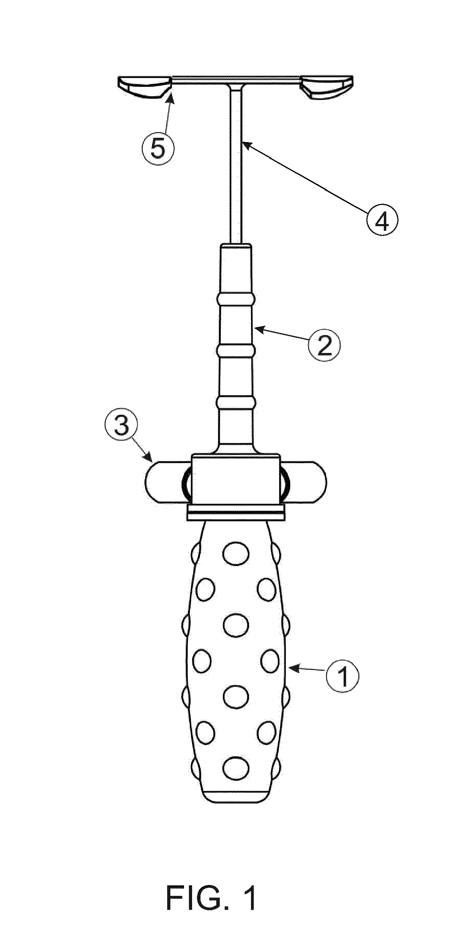

Figure 1, a front view of the invention, in which the main elements are shown; the container handle (1) which is coiled to the lid (2) which is complimented with the inferior flanges (3), and is connected to the pivot (4) in which the superior flanges (5) are located in both ends.

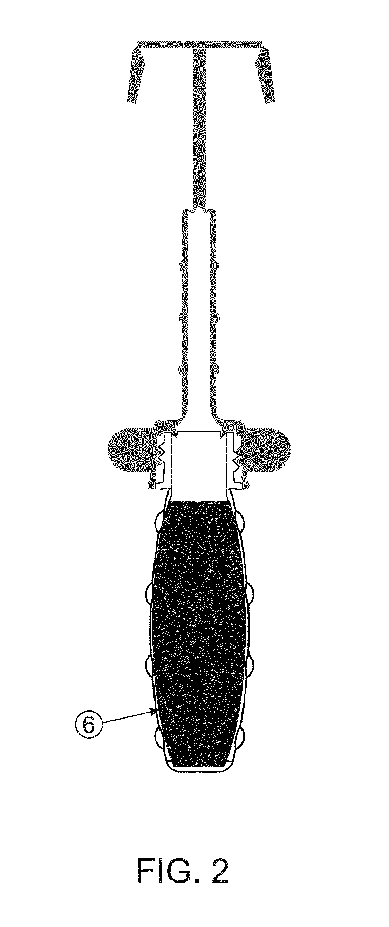

Figure 2, an internal view of the invention, in which the non frozen seasoning (6) is added to the container handle (1).

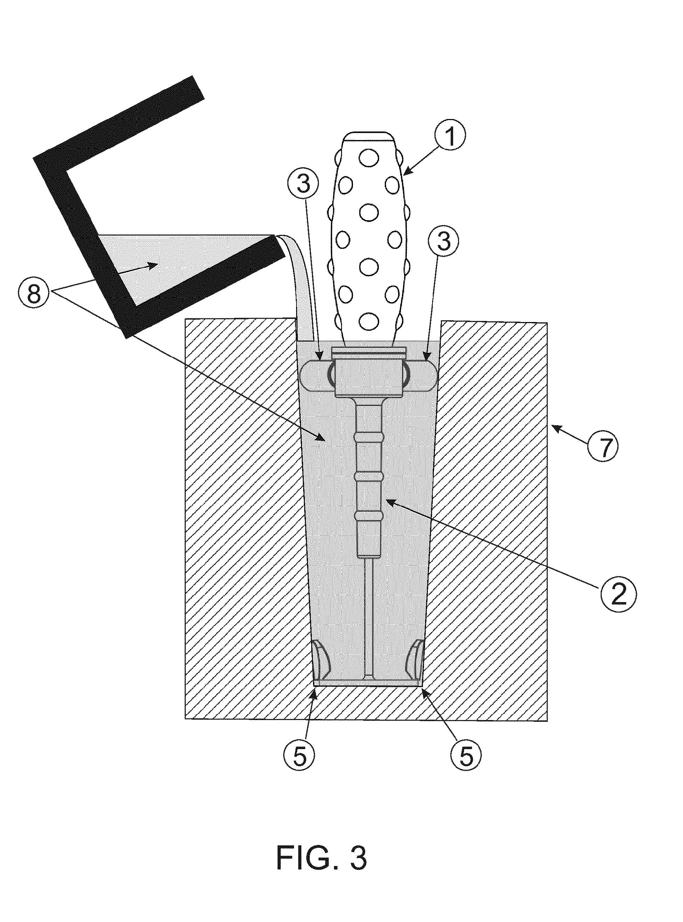

Figure 3, shows exactly how the invention is. Once the container handle (1) is filled with the non frozen seasoning and coiled to the lid (2), the superior flanges (5) are folded in a way in which they are parallel to the pivot (4) and is introduced to the popsicle mold (7) to which the seasoning (8) will be filled in to create the popsicle in which the inferior flanges (3) secure the handle so that it can stand in position without additional support while the popsicle is frozen.

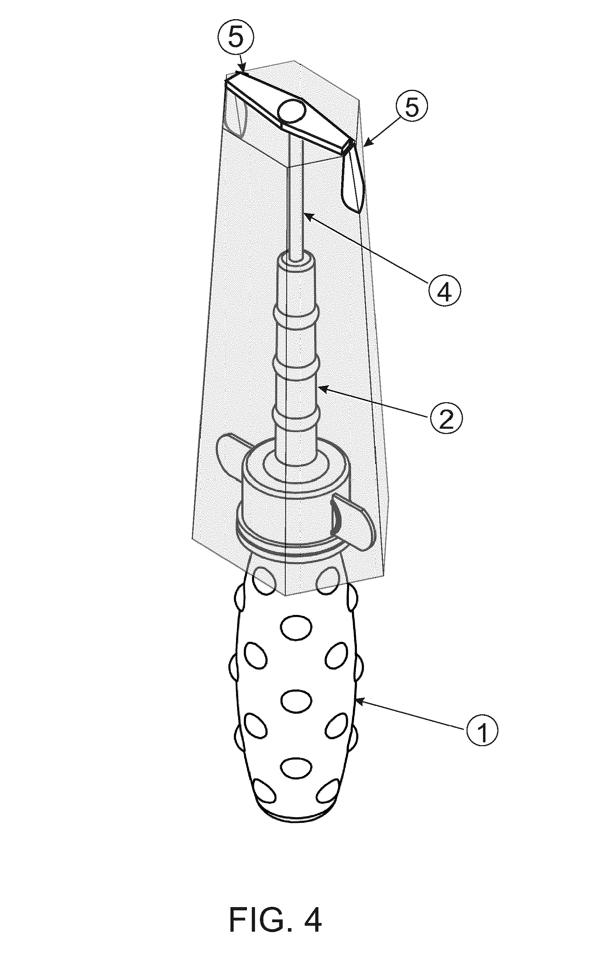

Figure 4, the non frozen container handle for popsicles can be appreciated isometrically in the way it will be perceived by the consumer.

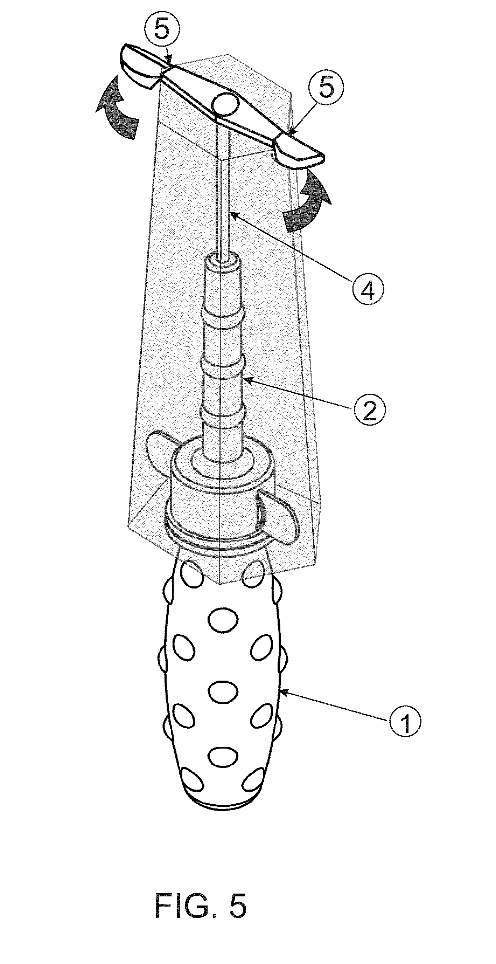

Figure 5, the beginning of the operation is appreciated, in which the superior flanges (5) will be lifted by the consumer.

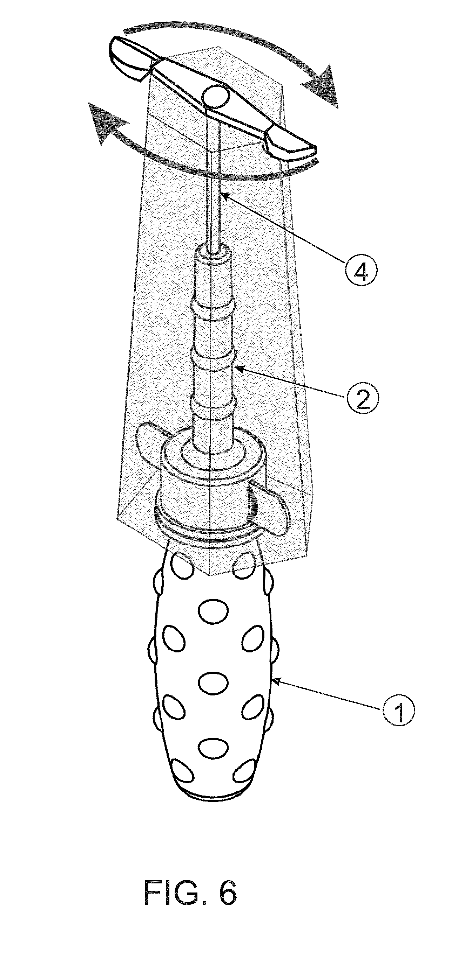

Figure 6, shows how the superior flanges (5) will be turned in any direction.

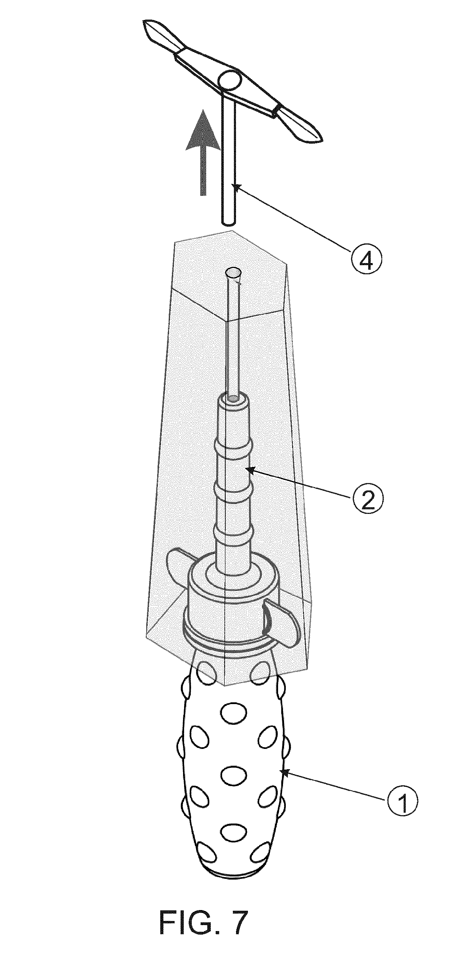

Figure 7, details that once the superior flanges (5) are rotated, the pivot (4) will pop out of the lid (2), the consumer must pull the pivot (4) to produce a hole in the ice.

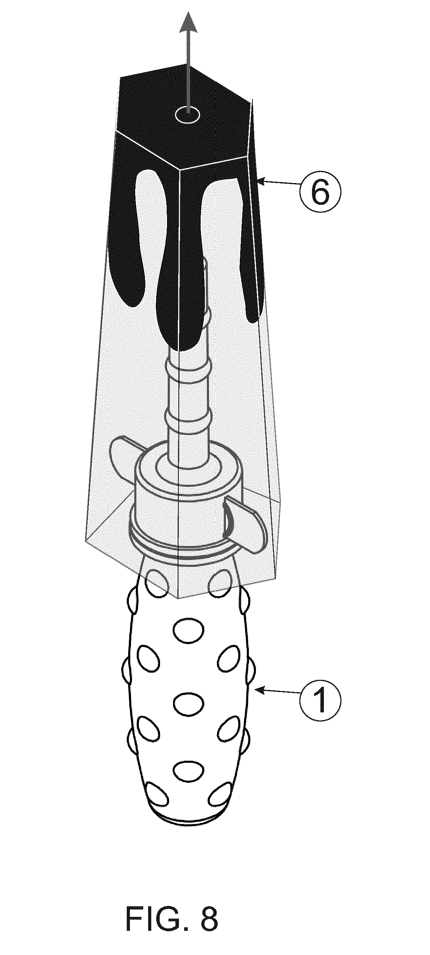

Figure 8, an isometric view of the invention, in which the consumer will press the container handle (1) to make the seasoning flow through the lid (2) up to the hole left by the pivot (4) to suffuse the popsicle.

## Claims

1. Container handle of non frozen seasonings for popsicles, **characterized by** a) container handle, b) lid fabricated to attach the c) pivot, designed with the superior flanges to allow it to pop from the lid.

2. Container handle of non frozen seasonings for popsicles, as claimed in CLAIM 1, characterized for being composed of a container handle which is designed with half spheres in the surface to increase the grip for the consumer and avoid them from slipping without being harmful.

3. Container handle of non frozen seasonings for popsicles as claimed in CLAIMS 1 and 2, characterized for having a lid with inferior and superior flanges which work to keep the utility patent fix inside the popsicle mold in the freezing process without needing any additional artifacts.

4. Container handle of non frozen seasonings for popsicles as claimed in all the previous CLAIMS, **characterized by** the lid which has rings on the center next to the inferior flanges, which allow the ice to adhere and avoid the popsicle to slice.

5. Container handle of non frozen seasonings for popsicles as claimed in all the previous CLAIMS, **characterized by** the pivot that pops from the lid with the help of the superior flanges and the rotating movement produced by the consumer.

6. Container handle of non frozen seasonings for popsicles as claimed in all the previous CLAIMS, the container handle is fabricated with low density polyethylene, which allows it to be flexible, the container handle has a thread in its neck which allows it to assemble with the lid. The lid is fabricated with plastic, which allows it to break at the pivot spot when submitted to a torque force and allows it not to be breakable. Besides the thread which allows the assemble, there are two rifling locks, which allow the coil but once inside prevent both parts to unassembled, this is with the goal to give the consumer an additional warranty seal, and to simplify its use.

7. Container handle of non frozen seasonings for popsicles as claimed through CLAIMS 1 to 6 which has de function that when the consumer presses the container handler (1), the capacity volume will decrease, making the seasoning flow through the hole suffusing the popsicle in a comfortable, controllable, and hygienic manner, easing the incorporation of different flavors and textures on a popsicle.
